(19)

**Europäisches Patentamt**
**European Patent Office**
**Office européen des brevets**

(11)  **EP 4 738 280 A1**

(12)  **EUROPEAN PATENT APPLICATION**

(43) Date of publication:
**06.05.2026 Bulletin 2026/19**

(21) Application number: **25211681.9**

(22) Date of filing: **28.10.2025**

(51) International Patent Classification (IPC):
**G06V 10/774** (2022.01)    **G06V 10/82** (2022.01)

(52) Cooperative Patent Classification (CPC):
**G06V 10/774; G06V 10/82**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.10.2024 US 202418933479**

(71) Applicant: **Robert Bosch GmbH
70442 Stuttgart (DE)**

(72) Inventors:
- **Azari, Bahare
  San Jose, CA, 95126 (US)**
- **Qiu, Chen
  Pittsburth, PA, 15219 (US)**
- **Schmedding, Sabrina
  75233 Tiefenbronn (DE)**
- **Lin, Wan-Yi
  Wexford, PA, 15090 (US)**

(74) Representative: **Isarpatent
Patent- und Rechtsanwälte Barth
Charles Hassa Peckmann & Partner mbB
Friedrichstrasse 31
80801 München (DE)**

(54)  **CONTROLLED DEFECT AUGMENTATION VIA TEXT AND IMAGE GUIDED DIFFUSION MODEL**

(57)  A machine learning (ML) system includes a vision language model (VLM) and a diffusion model. The VLM is finetuned prior to training the diffusion model with data pairs. A data pair includes image data displaying an anomaly and text data describing the image data. The finetuned VLM includes an image encoder that generates image embeddings using the image data and a text encoder that generates text embeddings using the text data. Semantic subcode is generated using the image embeddings and the text embeddings. The diffusion model generates stochastic subcode using the image data. The diffusion model generates a reconstructed image using the stochastic and semantic subcodes. A loss is optimized based on an expected value of a difference between predicted noise of a noisy instance of the image data at a particular time and actual noise of that noisy instance. Parameters of the diffusion model are updated using the loss.

FIG. 1

EP 4 738 280 A1

**Description**

TECHNICAL FIELD

This disclosure relates generally to computer vision, and more particularly to controlled defect augmentation via a diffusion model guided by text and images.

BACKGROUND

A significant challenge in training efficient anomaly detection models is the scarcity of balanced datasets, which encompass both normal and defective images in suitable proportions. For example, defective images are much less available and less diverse in manufacturing settings. This lack of defective images in manufacturing settings creates challenges to training anomaly detection models in these manufacturing settings.

Also, traditional defect augmentation methods with generative models can be biased to their training data. They often experience mode collapse, where they consistently generate overly similar outputs, and fail to produce diverse, authentic images, limiting their utility in producing effective augmented datasets for defective images.

SUMMARY

The following is a summary of certain embodiments described in detail below. The described aspects are presented merely to provide the reader with a brief summary of these certain embodiments and the description of these aspects is not intended to limit the scope of this disclosure. Indeed, this disclosure may encompass a variety of aspects that may not be explicitly set forth below.

According to at least one aspect, a computer-implemented method relates to training at least a diffusion model with a training dataset that includes data pairs. The data pairs include at least a first data pair. The first data pair includes at least (i) image data that displays an anomaly and (ii) text data that describes the corresponding image data including the anomaly. The method includes generating, via an image encoder, image embeddings using pixels of the image data. The method includes generating, via a text encoder, text embeddings using the text data. The method includes generating semantic subcode using the image embeddings and the text embeddings. The method includes generating, via the diffusion model, stochastic subcode using the pixels of the image data. The method includes generating, via the diffusion model, reconstructed image data using the stochastic subcode and the semantic subcode. The reconstructed image data is a reconstruction of the image data via the diffusion model. The method includes optimizing a loss based on an expected value of a difference between a predicted noise of a noisy image at a particular time and an actual noise of the noisy image at the particular time during the generation of the reconstructed image data. The method includes updating parameters of the diffusion model using the loss.

According to at least one aspect, a system includes at least one processor and at least one computer memory, which is in data communication with the one or more processors. The one or more computer memory has computer readable data stored thereon. The computer readable data includes instruction that, when executed by one or more processors, causes the one or more processors to perform a method of training at least a diffusion model with a training dataset that includes data pairs. The data pairs include at least a first data pair. The first data pair includes at least (i) image data that displays an anomaly and (ii) text data that describes the corresponding image data including the anomaly. The method includes generating, via an image encoder, image embeddings using pixels of the image data. The method includes generating, via a text encoder, text embeddings using the text data. The method includes generating semantic subcode using the image embeddings and the text embeddings. The method includes generating, via the diffusion model, stochastic subcode using the pixels of image data. The method includes generating, via the diffusion model, reconstructed image data using the stochastic subcode and the semantic subcode. The reconstructed image data is a reconstruction of the image data via the diffusion model. The method includes optimizing a loss based on an expected value of a difference between a predicted noise of a noisy image at a particular time and an actual noise of the noisy image at the particular time during the generation of the reconstructed image data. The method includes updating parameters of the diffusion model using the loss.

According to at least one aspect, a computer-implemented method relates to generating a dataset for training a machine learning model. The method includes receiving a source image with source image data that is non-anomalous. The method includes receiving text input that describes (i) an anomaly to be generated on the source image and (ii) at least one attribute of the anomaly. The method includes generating, via an image encoder, source image embeddings using pixels of the source image. The method includes generating, via a text encoder, text input embeddings using the text input. The method includes generating a semantic subcode using the source image embeddings and the text input embeddings. The method includes generating, via a diffusion model, a stochastic subcode using the source image. The method includes generating, via the diffusion model, a synthetic image using the stochastic subcode and the semantic subcode. The synthetic image displays the source image with the anomaly as described by the text input. The dataset includes at least the synthetic image. The dataset is configured for training the machine learning model for anomaly detection. For example, the machine learning model may be an image classifier that classifies digital images as being anomalous or non-anomalous.

These and other features, aspects, and advantages of the present invention are discussed in the following detailed description in accordance with the accompanying drawings throughout which like characters represent similar or like parts. Furthermore, the drawings are not necessarily to scale, as some features could be exaggerated or minimized to show details of particular components.

BRIEF DESCRIPTION OF THE FIGURES

FIG. 1 is a diagram that illustrates aspects of finetuning a pretrained vision language model according to at least one example embodiment of the disclosure.
FIG. 2 is a diagram that illustrates aspects of training a conditional diffusion model according to at least one example embodiment of this disclosure.
FIG. 3 is a diagram that illustrates aspects of an image synthesis process via a trained defect augmentation model according to at least one example embodiment of this disclosure.
FIG. 4 is a diagram of an example of a system with a controlled defect augmenter according to at least one example embodiment of this disclosure.
FIG. 5 illustrates a flow diagram of an example of a process of generating a dataset via a controlled defect augmenter according to at least one example embodiment of this disclosure.
FIG. 6 is a diagram of a system that includes a machine learning model trained on a dataset generated by the controlled defect augmenter according to at least one example embodiment of this disclosure.
FIG. 7 is a diagram of a system of FIG. 6 with respect to manufacturing technology according to at least one example embodiment of this disclosure.
FIG. 8 is a diagram of a system of FIG. 6 with respect to imaging technology according to at least one example embodiment of this disclosure.

DETAILED DESCRIPTION

The embodiments described herein, which have been shown and described by way of example, and many of their advantages will be understood by the foregoing description, and it will be apparent that various changes can be made in the form, construction, and arrangement of the components without departing from the disclosed subject matter or without sacrificing one or more of its advantages. Indeed, the described forms of these embodiments are merely explanatory. These embodiments are susceptible to various modifications and alternative forms, and the following claims are intended to encompass and include such changes and not be limited to the particular forms disclosed, but rather to cover all modifications, equivalents, and alternatives falling with the spirit and scope of this disclosure.

This disclosure addresses the challenges associated with training efficient anomaly detection models due to a scarcity of balanced datasets, which encompass both (i) normal or "non-anomalous images" (e.g., digital images that do not display anomalies/defects) and (ii) "anomalous images" (e.g., digital images that display anomalies/defects) in suitable proportions. Also, with respect to generative models, there may be issues with sampling data unconditionally from generative models as these models are prone to mode collapse or they may be biased to the limited variations of the datasets and do not always produce desirable diversity in the sample instances.

Recognizing these technical issues, the embodiments disclosed herein leverage data augmentation techniques to increase the number of defective samples (i.e., anomalous images) in a dataset while also providing a more controlled way of generating these defective samples. For example, the embodiments disclosed herein enable a user to specify one or more different attributes (e.g., location, shape, severity level, etc.) of a defect/anomaly, which will be generated in a new sample or synthetic image. The embodiments achieve this control by conditioning a generative model, such as a diffusion model 140, to generate conditional samples. Specifically, the embodiments of this disclosure leverage both image embeddings and corresponding text embeddings that are sourced from a pre-trained and fine-tuned foundational model (e.g., contrastive language image pretraining (CLIP) model or a state-of-the-art vision-language foundation model). By doing so, the embodiments achieve a guided diffusion model 140 while also offering a data augmentation method for generating new images (e.g., synthetic images) that display the desired defects.

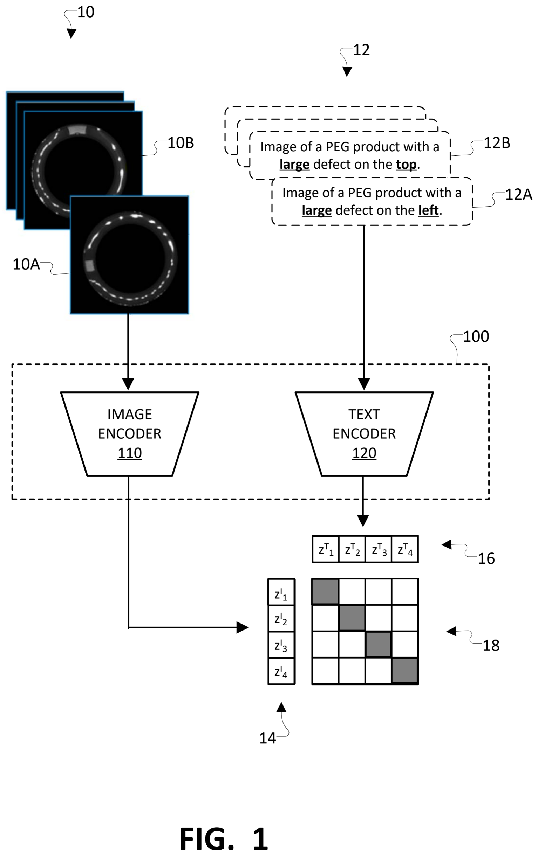

FIG. 1, FIG. 2, and FIG. 3 illustrate aspects of a pipeline that conditions a diffusion model 140 on a combination of image embeddings and corresponding text embeddings that are extracted from a fined-tuned large vision-language model, such as the CLIP model or the like. This pipeline is advantageous in enabling a user to sample different images from various product types with desired defects. In addition, the embodiments are advantageous in constructing a human-understandable natural language interface to govern and manipulate various attributes of the generated anomalies with greater accuracy and flexibility, thereby enabling and providing more detailed and manageable ways to create anomalous images for data augmentation.

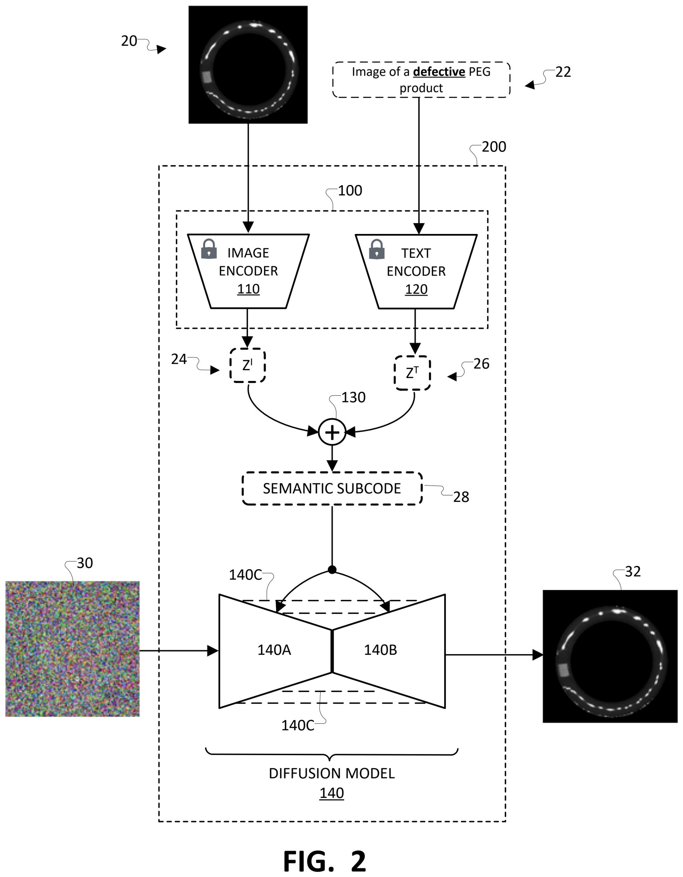

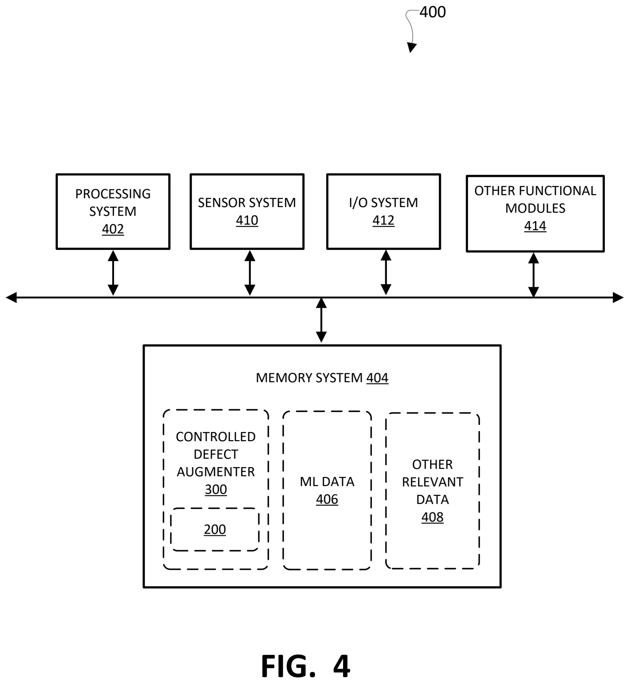

FIG. 1 and FIG. 2 illustrate a training process of a machine learning system according to an example embodiment. The machine learning system comprises a defect augmentation model 200, which includes a vision language model (VLM) 100 and a diffusion model 140. As an example, in FIG. 1, the training process is executed by one or more processors (e.g., processing system 402 of FIG. 4). The training process includes at least (i) finetuning the VLM 100 and (ii) training a guided diffusion model 140 for image synthesis. The finetuning of the VLM 100 occurs before the training the guided diffusion model 140 for image synthesis.

FIG. 1 is a diagram that illustrates aspects of a first phase of the training process according to an example embodiment. The first phase of the training process includes finetuning the pretrained VLM 100. For example, in FIG. 1, the VLM 100 includes CLIP model. Specifically, the VLM 100 includes a pretrained image encoder 110 and a pretrained text encoder 120. The pretrained image encoder 110 is configured to generate image embeddings 14 using pixels of the image data 10 of a set of digital images. The pretrained text encoder 120 is configured to generate text embeddings 16 using text data 12. The text data may be associated with the digital images.

The training process uses a finetuning dataset, which may comprise a select subset of "in-detailed" annotated image data. The finetuning dataset is used to finetune the pre-trained VLM 100 (e.g., pretrained CLIP model). This finetuning dataset includes data pairs of (i) digital images with image data 10 and (ii) text data 12 describing the corresponding digital images in detail. As a non-limiting example, in a manufacturing setting, the image data 10 may include production data (e.g., digital images of products) at various stages of a manufacturing process. Regarding the digital images, the finetuning dataset includes (i) a subset of digital images that display normal and non-anomalous image data (i.e., defect-free image data) and (ii) a subset of digital images that display anomalous image data (e.g., defective image data). For instance, in FIG. 1, the finetuning dataset includes at least a first digital image with first image data 10A that displays a top plan view of a PEG product with a large defect on the left side of the PEG product. As another example, in FIG. 1, the finetuning dataset includes at least a second digital image with second image data 10B that displays a top plan view of a PEG product with a large defect on the top. In these non-limiting examples, the finetuning dataset involves digital images of PEG products and corresponding text data associated with these PEG products. As shown in FIG. 1, FIG. 2 and FIG. 3, a top view of the PEG product includes a ring of sealing fluid illuminated by a ring of LEDs.

A digital image comprises pixels. In digital imaging, a pixel is the smallest addressable element in a raster image, or the smallest addressable element in a dot matrix display device. In most digital display devices, pixels are the smallest element that can be manipulated through software. Each pixel is a sample of an original image, whereby more samples typically provide more accurate representations of the original image. The intensity of each pixel is variable. For example, in color imaging systems, a color is typically represented by three or four component intensities such as red, green, and blue, or cyan, magenta, yellow, and black.

Meanwhile, the data pairs include text data 12. The text data 12 includes descriptive text describing the corresponding image data 10 of that data pair. The text data 12 includes details of one or more attributes, particularly those related to anomalies or defects when present in the corresponding image data 10. For instance, the descriptive text may specify a "data type" (i.e., defective or non-defective), a specific "defect" that is present, a "location" of a defect, a defect level indicative of a "severity" of the defect, or any number and combination thereof. As a non-limiting example, in FIG. 1, the finetuning dataset includes at least first text data 12A that describes at least the first image data 10A. The first text data 12A includes the following text: "Image of a PEG product with a large defect on the left." As another example, in FIG. 1, the finetuning dataset includes at least second text data 12B that describes at least the second image data 10B. The second text data 12B includes the following text: "Image of a PEG product with a large defect on the top." In these examples, the text data 12 is generated via a prompt such as "Image of a PEG product with a [size] defect on the [location]," where [size] represents a slot for insertion of an indication of a size of a defect if displayed on the image data 10 and [location] represents a slot for insertion of an indication of a location of a defect if displayed on the image data 10.

The strength of using the pretrained VLM 100 (e.g., CLIP model) lies in its ability to quickly adapt to the nuances of these new product images, even with a limited dataset comprising, for example, just 32 data pairs (i.e., image-text pairs). Fine-tuning the pretrained VLM 100 (e.g., CLIP model) follows the same mechanism as in the pretraining phase through a contrastive learning objective. Finetuning includes maximizing the similarity between positive pairs (an image and its associated text) while minimizing the similarity between negative pairs (a text and non-corresponding images and vice versa).

Also, for an efficient and logical training process, the finetuning dataset is organized into multiple buckets. Each bucket contains data pairs of images and texts that share strong similarities in terms of attributes, thereby ensuring semantic similarities in both texts and images. When sampling a batch for training, the training process includes selecting, at most, one sample from each bucket. This sampling approach guarantees that, when minimizing the similarity between a text and its non-matching images (aka negative pairs), the training process does not include two closely related pairs in the same batch. For a given batch of data pairs of images and texts, the training process first computes the image embeddings 14 via the image encoder 110 and text embeddings 16 via the text encoder 120. Next, similarity scores between all image-text pairs are determined using a dot product 18. As a non-limiting example, the data pair of the image embedding 14 (e.g. $z_2^I$) of image data 10B and the text embedding 16 (e.g. $z_2^T$) of the text data 12B results in a dot product 18 ( $z_2^I \cdot z_2^I$ ) of these embeddings. The softmax function then computes the probability of each text paired with its respective image and vice versa. The primary objective is to maximize the log probability of the corresponding text-image pairing. This loss pushes the VLM 100 to produce image and text embeddings that are close in the language-image embedding space (e.g., CLIP embedding space) for matching pairs and far apart for non-matching pairs.

FIG. 2 is a diagram that illustrates aspects of the second phase of the training process. The second phase of the training process includes training a guided diffusion model 140 for image synthesis. In FIG. 2, the guided diffusion model 140 is conditioned on a combination of text data and image data. For this second phase, the training process leverages a training dataset that is more extensive and larger than the finetuning dataset. The training dataset includes data pairs. Each data pair include (i) digital images with image data and (ii) text data describing that corresponding image data. The training dataset includes (i) a subset of data pairs of text data and corresponding digital images with non-anomalous image data (e.g., digital images with normal image data without defects) and (ii) another subset of data pairs of text data and corresponding digital images with anomalous image data (e.g., digital images with image data that displays defects).

This training dataset does not necessitate detailed annotation for all the data samples. In this regard, the training process merges the smaller, more detailed annotations (e.g. text data) of the finetuning dataset from the first phase (FIG. 1) with a larger training dataset that can be automatically annotated using a label indicative of a normal, non-defective image (e.g., "OK" label) or a label indicative of a non-normal, defective image (e.g. "not OK" label). This minimal annotation describes the data type and indicates whether the image data of the digital image is normal or defective. As an example, FIG. 2 shows a non-limiting example of a data pair, which includes (i) a digital image with image data 20 that displays a top plan view of a PEG product having a defect and (ii) text data 22 that includes "Image of a defective PEG product." In these examples, the text data is generated via a prompt such as "Image of a [data type] PEG product," where [data type] represents a slot for insertion of an indication of whether or not the PEG product is defective or non-defective ("normal" or "OK"). The conditional diffusion model 140 is trained using data pairs of "OK" or "not OK" images with their corresponding text descriptions.

The image encoder 110 and the text encoder 120, with the tokenizer, are utilized to extract different semantic subcodes (e.g., embeddings in the CLIP embedding space) for the image data and the text data, respectively. For example, in FIG. 2, the image encoder 110 is configured to generate image embeddings 24 using the pixels of the image data 20 of the digital image. Also, in FIG. 2, the text encoder 120 is configured to generate text embeddings 26 using the text data 22. The tokenizer (not shown) is associated with the text encoder 120. The tokenizer uses the text data 22 to generate tokenized text data for the text encoder 120.

The training process further includes a semantic subcode generator 130. The semantic subcode generator 130 is configured to generate a semantic subcode 28 using the image embeddings 24 and the text embeddings 26 via equation 3. In other words, the semantic subcode generator 130 merges these two different subcodes (e.g., image embeddings 24 and text embeddings 26) to generate a unified "semantic" subcode 28 that balances the image representations with the text representations using a coefficient ($\alpha$) ranging from 0 to 1. In equation 1, $X_I$ represents the image input (e.g., digital image with image data 20) and $emb_{Image}$ represents the image embeddings, which are generated via an image encoding function ($CLIPEnc_{Image}()$) of the image encoder 110. In equation 2, $X_T$ represents the tokenized text data (e.g., tokenized version of the text data 22) and $emb_{Text}$ represents the text embeddings, which are generated via a text encoding function ($CLIPEnc_{Texc}()$) of the text encoder 120. The training process further includes transmitting this semantic subcode 28 to the diffusion model 140.

$$emb_{Image} = CLIPEnc_{Image}(X_I) \qquad\qquad [1]$$

$$emb_{Text} = CLIPEnc_{Text}(X_T) \qquad\qquad [2]$$

$$emb_{combined} = (1 - \alpha) \times emb_{Image} + \alpha \times emb_{Text} \qquad\qquad [3]$$

The diffusion model 140 includes at least a diffusion encoder 140A and a diffusion decoder 140B along with skip connections 140C. The diffusion encoder 140A includes a UNet architecture. The forward mechanism of the diffusion model 140 serves as a "stochastic" encoder, which captures the stochastic variation within the image data 20. In equation 4, $emb_{stochastic}$ represents the stochastic subcode 30, which is generated via the forward mechanism function ($Diff_{forward}()$) of the diffusion model 140. The denoising UNet in the diffusion model 140 functions as a decoder to reconstruct the original image data 20 and generate a reconstructed image 32. The reconstructed image 32 comprises reconstructed image data.

In equation 5, $\widehat{X_I}$ represents the reconstructed image 32, which is generated via the decoding function *(Diff_decoder(()* of the diffusion model 140 upon receiving the stochastic subcode 30 ($emb_{stochastic}$) and the semantic subcode 28 ($emb_{combined}$).

$$emb_{stochastic} = Diff_{forward}(X_I) \qquad [4]$$

$$\widehat{X_I} = Diff_{decoder}(emb_{stochastic}, emb_{combined}) \qquad [5]$$

The training process includes updating parameters, $\theta$ and $\phi$, of the diffusion model 140 upon optimizing the loss function $L_{simple}$, as expressed in equation 6. Specifically, the training process includes updating parameters of the diffusion model 140 while freezing the parameters of the VLM 100. In this regard, FIG. 2 illustrates a lock on the image encoder 110 and a lock on the text encoder 120 to indicate that the parameters are frozen (i.e., not updated) during this second stage of training. Also, in equation 6, $\varepsilon_\theta$ ($x_t$, $t$, $emb_{combined}$) is a function that takes a noisy image $x_t$ at time $t$ with the semantic subcode $emb_{combined}$ and predicts its noise using UNet. In equation 6, $\varepsilon_t$ represents the actual noise that is added to $x_0$ to produce $x_t$. Specifically, in equation 6, $\mathbb{E}_{x_0,\epsilon_t}[\ ]$ represents an expectation function, which is used to compute the expected value of $\|\epsilon_\theta\ (x_t, t, emb_{combined}) - \epsilon_t\|_2^2$ over $x_0$ and $\varepsilon_t$, as expressed in equation 6. The expected values are computed with respect to at least the process of generating the reconstructed image data via the diffusion model 140.

$$L_{simple} = \sum_{t=1}^{T} \mathbb{E}_{x_0,\epsilon_t}[\|\epsilon_\theta\ (x_t, t, emb_{combined}) - \epsilon_t\|_2^2] \qquad [6]$$

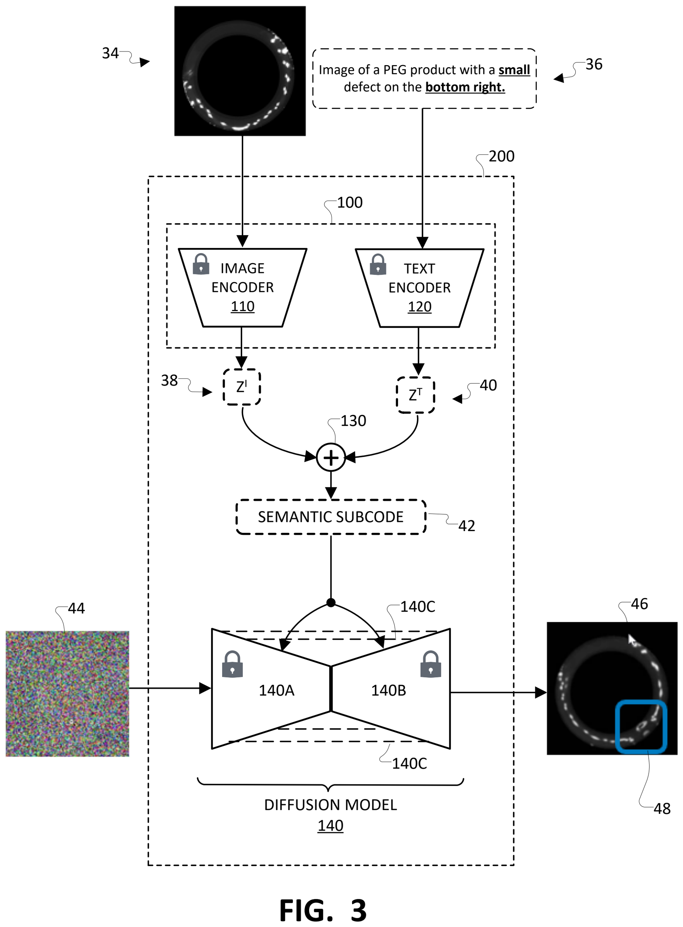

FIG. 3 is a diagram that illustrates aspects of an image synthesis process via the defect augmentation model 200 according to an example embodiment. During the image synthesis process, the image encoder 110, the text encoder 120, and the diffusion model 140 are locked and have their parameters frozen, as indicated by the locks in FIG. 3. The image synthesis process occurs during inference and after the completion of both the first phase (FIG. 1) and the second phase (FIG. 2) of the training process. The image synthesis process is configured to be implemented by one or more processors of the processing system 402 (FIG. 4) of the system 400 or one or more processing devices of another computer system.

The defect augmentation model 200 is configured to receive input data pairs. In this regard, a data pair includes (i) a digital image with normal ("OK") image data and (ii) text data with specific text describing at least one desired anomaly/defect that is to be newly generated on that normal image data. For instance, FIG. 3 illustrates a non-limiting example of a data pair, which includes (i) a digital image with image data 34 that displays a top plan view of a normal ("non-anomalous") PEG product without defects that is labeled as "OK" and (ii) text data 36 describing a specific defect to be generated on the image data 34. In this case, the text data 36 describes that there should be a small defect generated on the bottom right of the image of the PEG product. Specifically, the text data 36 is "Image of PEG product with a small defect on the bottom right." In this example, the text data is generated via the following prompt: "Image of a PEG product with a [defect size] defect on the [location]," where [defect size] represents a slot for insertion of an indication of a desired size of the defect to be generated on the image data 34 and where [location] represents a slot for insertion of an indication of a desired size of the defect to be generated on the image data 34. As demonstrated by this non-limiting example, a user may control attributes (e.g., size and location) of at least one defect that is to be generated as the new image data 46 by specifying attributes via slots of the prompt for the text data 36.

In FIG. 3, as an example, the finetuned image encoder 110 and the finetuned text encoder 120 are configured to receive the aforementioned data pair as input data. Also, the defect augmentation model 200 receives or obtains a coefficient ($\alpha$) having a value of 0, a value between 0 and 1, or a value of 1 to balance the influence of both image and text embeddings on the output image. In response to receiving the image data 34, the image encoder 110 generates image embeddings 38 ("image semantic subcode") using pixels of the image data 34 of the digital image. Also, in response to receiving the text data 36, the tokenizer and the text encoder 120 generate the text embeddings 40 ("text semantic subcode") using the text data 36. The semantic subcode generator 130 generates a semantic subcode using the image embeddings 38 and the text embeddings 40 via equation 3 based on the coefficient ($\alpha$).

In addition, the diffusion model 140 includes a diffusion process, which utilizes the image data 34 to produce the stochastic subcode 44. In this regard, the diffusion model 140 generates stochastic subcode 44 using pixels of the image data 34. Next, the generative procedure of the diffusion model 140 then creates new image data 46 using the semantic subcode 42 and the stochastic subcode 44. The generated image with the new image data 46 retains a number of characteristics of the normal image input (e.g., image data 34) while also possessing a defect with the attributes specified in the text data input (e.g., text data 36). As a non-limiting example, the generated image includes new image data 46 which displays most of the characteristics of the (OK) input image of image data 34 while being modified to display a small defect in the bottom right corner of the generated image as specified by the text data 36. For ease of viewing the small defect, FIG.

3 includes a small bounding box 48 around this newly generated defect. That is, FIG. 3 includes the bounding box merely for this discussion to highlight the newly generated defect with respect to the image data 46, but the image data 46 may not include this bounding box 48.

FIG. 4 is a diagram of an example of a system 400 with a controlled defect augmenter 300 according to an example embodiment. The system 400 includes at least a processing system 402. The processing system 402 includes one or more processing devices. For example, the processing system 402 includes at least an electronic processor, a central processing unit (CPU), a graphics processing unit (GPU), a microprocessor, a field-programmable gate array (FPGA), an application-specific integrated circuit (ASIC), any suitable processing technology, or any number and combination thereof. The processing system 402 is operable to provide the functionality as described herein.

The system 400 includes at least a memory system 404, which is operatively connected to the processing system 402. The memory system 404 is in data communication with the processing system 402. In an example embodiment, the memory system 404 includes at least one non-transitory computer readable medium, which is configured to store and provide access to various data to enable at least the processing system 402 to perform the operations and functionality, as disclosed herein. In an example embodiment, the memory system 404 comprises a single device or a plurality of devices. The memory system 404 can include electrical, electronic, magnetic, optical, semiconductor, electromagnetic, or any suitable storage technology that is operable with the system 400. For instance, in an example embodiment, the memory system 404 can include random access memory (RAM), read only memory (ROM), flash memory, a disk drive, a memory card, an optical storage device, a magnetic storage device, a memory module, any suitable type of memory device, or any combination thereof.

The memory system 404 includes at least the controlled defect augmenter 300, machine learning (ML) data 406, and other relevant data 408, which are stored thereon. The memory system 404 includes computer readable data that, when executed by the processing system 402, is configured provide the functions as described in at least FIG. 1, FIG. 2, and FIG. 3. The computer readable data can include instructions, code, routines, various related data, any software technology, or any number and combination thereof. Specifically, the controlled defect augmenter 300 includes computer readable data with instructions, which when executed by the processing system 402, is configured to train and employ the machine learning system (e.g., the defect augmentation model 200) as described in this disclosure. The controlled defect augmenter 300 includes the defect augmentation model 200, which comprises the VLM 100 and the diffusion model 140, as well as the semantic subcode generator 130. Also, the ML data 406 includes various training data, various loss data, various weight data and/or parameter data, as well as any related machine learning data that enables the system 400 to perform the functions as disclosed in this disclosure. For example, the various training data includes at least the finetuning dataset for finetuning the VLM 100 and the training dataset for training the defect augmentation model 200. The various training data may also include a new dataset that includes at least the synthetic images, which are generated by the controlled defect augmenter 300 via the defect augmentation model 200. The various training data may also include source images, which are used for generating the synthetic images. Meanwhile, the other relevant data 408 provides various data (e.g. operating system, etc.), which enables the system 400 to perform the functions as discussed herein.

In an example embodiment, as shown in FIG. 4, the system 400 is configured to include at least one sensor system 410. The sensor system 410 includes one or more sensors. For example, the sensor system 410 includes an image sensor or a camera. The sensor system 410 may also include a radar sensor, a light detection and ranging (LIDAR) sensor, a thermal sensor, an ultrasonic sensor, an infrared sensor, a motion sensor, an audio sensor, an inertial measurement unit (IMU), any suitable sensor, or any combination thereof. The sensor system 410 is operable to communicate with one or more other components (e.g., processing system 402 and memory system 404) of the system 400. More specifically, for example, the processing system 402 is configured to obtain the sensor data directly or indirectly from at least one sensor. The sensor system 410 and/or the processing system 402 is configured to generate digital images. The processing system 402 is configured to process digital images in connection with the controlled defect augmenter 300 and the ML data 406.

In addition, the system 400 includes other components that contribute to the controlled defect augmenter 300. For example, as shown in FIG. 4, the memory system 404 is also configured to store other relevant data 408, which relates to operation of one or more components (e.g., sensor system 410, an input/output (I/O) system 412, and other functional modules 414). In addition, the I/O system 412 includes an I/O interface and may include one or more devices (e.g., display device, keyboard device, speaker device, etc.). Also, the system 400 includes other functional modules 414, such as any appropriate hardware technology, software technology, or combination thereof that assist with or contribute to the functioning of the system 400. For example, the other functional modules 414 include communication technology that enables components of the system 400 to communicate at least with each other, as described herein. The communication technology may enable the system 400 to communicate with other network devices (not shown) over a communication network. With at least the configuration discussed in the example of FIG. 4, the system 400 is configured to enable the controlled defect augmenter 300 to perform the functions as discussed in this disclosure.

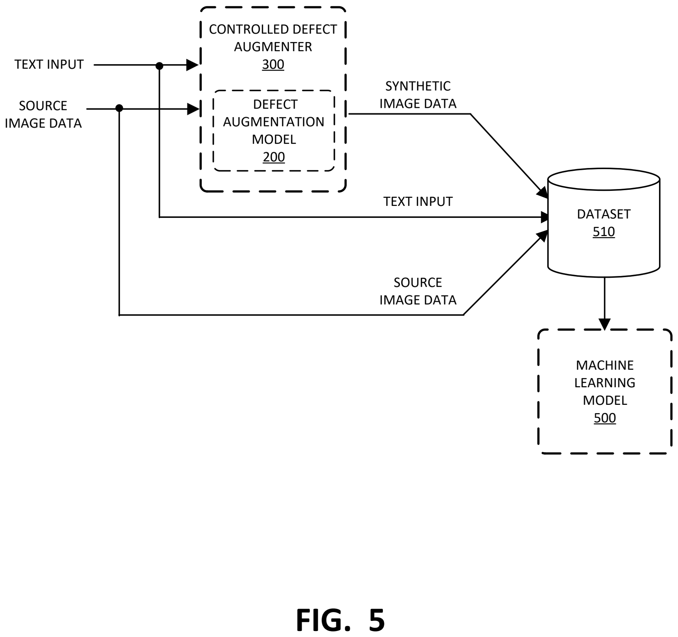

FIG. 5 illustrates a flow diagram of an example of a process of the controlled defect augmenter 300 according to an example embodiment. As shown in FIG. 3 and FIG. 5, the controlled defect augmenter 300 is configured to receive a data pair that includes (i) source image data (e.g., image data 34) that displays a non-anomalous image and (ii) text input (e.g., text data 36) that describes at least one desired anomaly/defect that is to be newly generated on that normal image data. The controlled defect augmenter 300 is configured to employ the defect augmentation model 200 to generate new image data 46 (synthetic image data). The controlled defect augmenter 300 is configured to generate the synthetic image data using the source image data and the text input via the process described in FIG. 3. The controlled defect augmenter 300 is advantageous in enabling a user to control the generation of anomalies and synthetic images by specifying information pertaining to these anomalies via the text input. This is advantageous in establishing a balanced dataset for training a machine learning model 500 (e.g., an anomaly detection model, an image classifier, an anomaly segmenter, etc.).

Also, as shown in FIG. 5, the process includes incorporating at least the synthetic image data and the source image data as a part of the dataset 510. The process includes generating a sufficient amount of synthetic images and a sufficient amount of source images for the dataset 510. Each synthetic image provides an anomalous image sample while each source image provides a non-anomalous image sample. The dataset 510 may also include each corresponding text input. A text input may be used as a label for the corresponding synthetic image data, where the label may serve as ground-truth data. Upon building the dataset 510 with a sufficient amount of synthetic image data and a sufficient amount of source image data, the process further includes using this dataset 510 with respect to the machine learning model 500 for pretraining, training, finetuning, or any number and combination thereof.

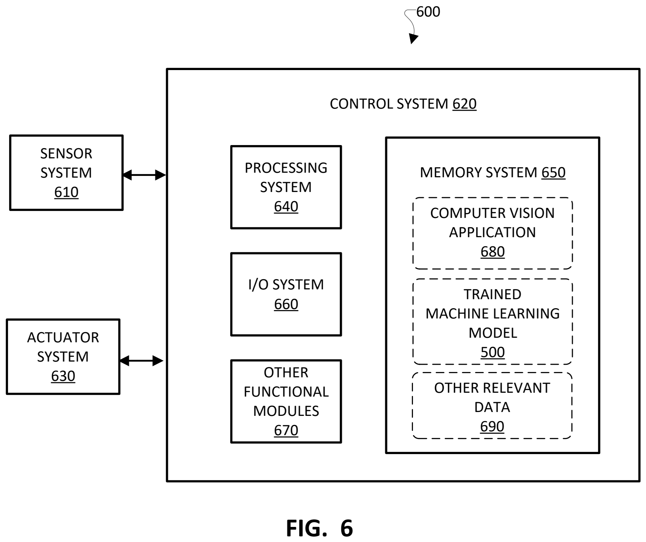

FIG. 6 is a diagram of a system 600, which is configured to include at least a trained machine learning model 500, which used the dataset 510 for its pretraining, training, finetuning, or any number and combination thereof. In this regard, the system 600 includes at least a sensor system 610, a control system 620, and an actuator system 630. The system 600 is configured such that the control system 620 controls the actuator system 630 based on sensor data from the sensor system 610. More specifically, the sensor system 610 includes one or more sensors and/or corresponding devices to generate sensor data. For example, the sensor system 610 includes at least one image sensor or camera. The sensor system 610 may also include a radar sensor, a light detection and ranging (LIDAR) sensor, a thermal sensor, an ultrasonic sensor, an infrared sensor, a motion sensor, any suitable sensor, or any combination thereof. Upon sensing its environment, the sensor system 610 is operable to communicate with the control system 620 via an input/output (I/O) system 660 and/or other functional modules 670, which includes communication technology.

The control system 620 is configured to obtain the sensor data directly or indirectly from one or more sensors of the sensor system 610. In this regard, the sensor data may include sensor data from a single sensor or sensor-fusion data from a plurality of sensors. Upon receiving input, which includes at least sensor data, the control system 620 is operable to process the sensor data via a processing system 640. In this regard, the processing system 640 includes at least one processor. For example, the processing system 640 includes an electronic processor, a CPU, a GPU, a microprocessor, a FPGA, an ASIC, processing circuits, any suitable processing technology, or any combination thereof. Upon processing at least this sensor data, the processing system 640 is operable to generate output data based on communications with memory system 650. In addition, the processing system 640 is operable to provide actuator control data to the actuator system 630 based on the output data.

The memory system 650 is a computer or electronic storage system, which is configured to store and provide access to various data to enable at least the operations and functionality, as disclosed herein. The memory system 650 comprises a single device or a plurality of devices. The memory system 650 includes electrical, electronic, magnetic, optical, semiconductor, electromagnetic, any suitable memory technology, or any combination thereof. For instance, the memory system 650 may include RAM, ROM, flash memory, a disk drive, a memory card, an optical storage device, a magnetic storage device, a memory module, any suitable type of memory device, or any combination thereof. With respect to the control system 620 and/or processing system 640, the memory system 650 is local, remote, or a combination thereof (e.g., partly local and partly remote). For example, the memory system 650 is configurable to include at least a cloud-based storage system (e.g. cloud-based database system), which is remote from the processing system 640 and/or other components of the control system 620.

The memory system 650 includes at least a computer vision application 680, the trained machine learning model 500, and other relevant data 690, which are stored thereon. The memory system 650 includes computer readable data for the computer vision application 680, the trained machine learning model 500, and the other relevant data, respectively. The computer readable data may include instructions, code, routines, various related data, any software technology, or any number and combination thereof. The computer vision application 680 and the trained machine learning model 500 are configured to be executed and/or implemented via the processing system 640. In this regard, the trained machine learning model 500 is configured to receive or obtain a digital image directly as input, which is sometimes referred to herein as the input image. The trained machine learning model 500 is configured to classify the digital image and output a single class label that identifies the class to which the digital image and/or an image segment thereof is deemed to belong.

The trained machine learning model 500 is advantageous in having been trained with a dataset 510, which is a balanced dataset of anomalous images and non-anomalous images. The trained machine learning model 500 benefits from being trained with dataset 510, which is curated and/or controlled with respect to the anomalies that are presented in the anomalous images. The trained machine learning model 500 has improved anomaly detection/segmentation performance on computer vision tasks. The trained machine learning model 500 is configured to output at least one label that is indicative of "anomalous" classification and at least one other label that is indicative of a "non-anomalous" classification based on the input image.

Furthermore, as shown in FIG. 6, the system 600 includes other components that contribute to operation of the control system 620 in relation to the sensor system 610 and the actuator system 630. For example, as shown in FIG. 6, the memory system 650 is also configured to store other relevant data 690, which relates to the operation of the system 600 and/or control one or more of its components (e.g., sensor system 610, control system 620, the actuator system 630, etc.). Also, as shown in FIG. 6, the control system 620 includes the I/O system 660, which includes one or more interfaces for one or more I/O devices that relate to the system 600. For example, the I/O system 660 provides at least one interface to the sensor system 610 and at least one interface to the actuator system 630. Also, the control system 620 is configured to provide other functional modules 670, such as any appropriate hardware technology, software technology, or any combination thereof that assist with and/or contribute to the functioning of the system 600. For example, the other functional modules 670 include an operating system and communication technology that enables components of the system 600 to communicate with each other as described herein. With at least the configuration discussed in the example of FIG. 6, the system 600 is applicable in various technologies, such as at least partially autonomous vehicles, robots, personal assistant technology, manufacturing technology, security technology, medical imaging technology, etc.

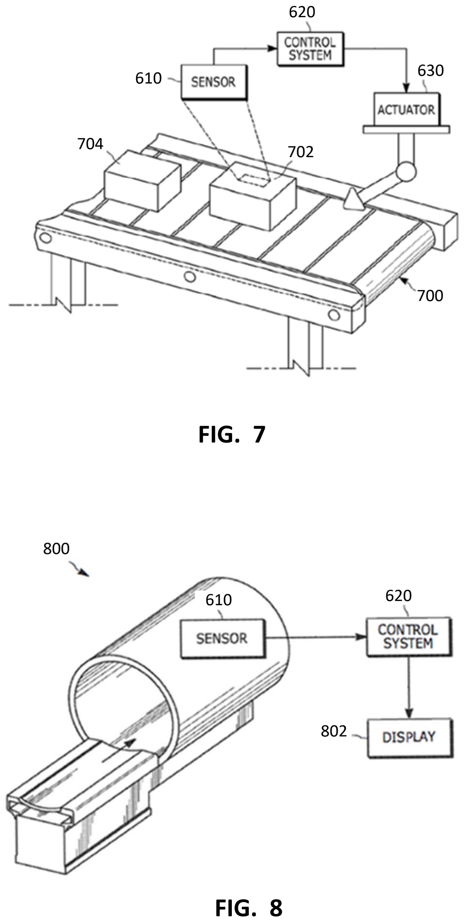

FIG. 7 and FIG. 8 illustrate different non-limiting examples of applications of the system 600. For a particular application, the system 600 includes (i) a computer vision application 680 that applies to that particular application and (ii) a trained machine learning model 500 that is trained on a particular dataset 510 that applies to that particular application. For example, the manufacturing technology 700 includes an application of the system 600 that includes a computer vision application 680 that relates to manufacturing and a trained machine learning model 500 that is trained on a dataset 510 that includes at least anomalous images of instances of the product 702 and non-anomalous images of instances of the product 702. As another example, the imaging technology 800 includes an application of the system 600 that includes a computer vision application 680 that relates to imaging (e.g., medical imaging) and a trained machine learning model 500 that is trained on a dataset 510 that includes at least anomalous images and non-anomalous images relating to that particular imaging (e.g., medical imaging) being performed via the imaging technology 800.

FIG. 7 is a diagram of the system 600 with respect to manufacturing technology 700 according to an example embodiment. As a non-limiting example, the manufacturing technology 700 includes any suitable type of manufacturing machine (e.g., a cutter, a sealer, a drill, etc.). In FIG. 7, the sensor system 610 includes at least one image sensor or optical sensor. The control system 620 is configured to obtain image data from the sensor system 610. The trained machine learning model 500 is configured to classify an input image or an image segment as being "anomalous" or "non-anomalous" given a state of a product 702 (e.g., PEG product of earlier examples), which is being manufactured or which is manufactured via the manufacturing technology 700. Also, the control system 620 is configured to generate actuator control data in response to the classification of the current state of the instant product 702 based on the sensor data captured by the sensor system 610. For instance, as a non-limiting example, in response to the actuator control data, the actuator system 630 may be configured to actuate a next manufacturing step 704 of the manufacturing process based on an "non-anomalous" classification of the instant product 702. Alternatively, in response to the actuator control data, the actuator system 630 may be configured to stop the manufacturing technology 700 from performing a next action on the instant product 702 and/or stop the instant product 702 from proceeding to the next manufacturing step 704 of the manufacturing process based on an "anomalous" classification of the instant product 702.

FIG. 8 is a diagram of the system 600 with respect to imaging technology 800 according to an example embodiment. As a non-limiting example, the imaging technology 800 includes a magnetic resonance imaging (MRI) apparatus, an x-ray imaging apparatus, an ultrasonic apparatus, a medical imaging apparatus, or any suitable type of imaging apparatus. In FIG. 8, the sensor system 610 includes at least one image sensor. The control system 620 is configured to obtain image data from the sensor system 610. The control system 620 is configured to classify digital image data, which is obtained from the sensor system 610. For example, the control system 620 may classify the digital image or an image segment thereof as being "anomalous" or "non-anomalous." The control system 620 is configured to generate actuator control data in response to the classification, e.g. class label, provided by the trained machine learning model 500. For instance, as a non-limiting example, the actuator control data may cause the control system 620 to highlight, at least partly, the digital image and display the highlighted digital image on a display 802. As another example, the actuator control data may cause the control system 620 to automatically transmit messages notifying one or more entities of the classification of the digital image.

As described in this disclosure, the embodiments disclosed herein include a number of advantageous features and benefits. For example, the embodiments are advantageous in controlling defective image generation via generative models. Specifically, the embodiments provide control within the generation process of diffusion models (e.g., diffusion model 140). Also, instead of relying on an autoencoder, the embodiments leverage foundational models (e.g., CLIP model), to guide a diffusion process of a diffusion model 140 more effectively. Specifically, the embodiments leverage the image encoder 110 and the text encoder 120 of a large, finetuned VLM 100 and incorporate relevant textual descriptions for each digital image in the process. The embodiments are advantageous in constructing a human-understandable natural language interface to govern and manipulate various attributes of anomalies to be generated in new images with greater accuracy and flexibility, thereby enabling more detailed and manageable ways to create anomalous images for data augmentation.

Also, the embodiments harness a large pre-trained VLM 100, which is finetuned, to guide the generative process of the diffusion model 140, thereby creating a novel defect augmentation pipeline. A finetuned VLM 100 is employed to discover high-level semantics with respect to a given digital image. The diffusion model 140 is trained using these high-level semantics, as conditions, to produce new images (e.g., new image data 46). The new image data 46 may be referred to as synthetic image data. Specifically, an input image is encoded into a dual latent representation. The first latent representation is the semantic subcode, which is linear and has the semantic content. The semantic subcode is extracted using the finetuned VLM 100. The second latent representation is the stochastic subcode, which represents the stochastic variations of the image data and which is captured by the diffusion process of the diffusion model 140. The diffusion model 140 then acts as a decoder. The diffusion model 140 merges the high-level semantics with the stochastic variations to reconstruct the original image. That is, the diffusion model 140 generates a reconstructed image 32 using the semantic subcode 28 and the stochastic subcode 30. This mechanism enables attribute manipulation with respect to a given digital image such that at least one new image is generated from a source image . These embodiments include utilizing the image encoder 110 and the text encoder 120 of a fine-tuned, pre-trained VLM 100, thereby extracting high-level semantics from a combination of an image input and its accompanying text input, which describes various attributes of the image input.

Furthermore, the above description is intended to be illustrative, and not restrictive, and provided in the context of a particular application and its requirements. Those skilled in the art can appreciate from the foregoing description that the present invention may be implemented in a variety of forms, and that the various embodiments may be implemented alone or in combination. Therefore, while the embodiments of the present invention have been described in connection with particular examples thereof, the general principles defined herein may be applied to other embodiments and applications without departing from the spirit and scope of the described embodiments, and the true scope of the embodiments and/or methods of the present invention are not limited to the embodiments shown and described, since various modifications will become apparent to the skilled practitioner upon a study of the drawings, specification, and following claims. Additionally, or alternatively, components and functionality may be separated or combined differently than in the manner of the various described embodiments and may be described using different terminology. These and other variations, modifications, additions, and improvements may fall within the scope of the disclosure as defined in the claims that follow.

## Claims

1. A computer-implemented method of a machine learning system that includes an image encoder, a text encoder, and a diffusion model, the method comprising:

   receiving a training dataset with data pairs, the data pairs include at least a first data pair that has at least (i) image data that displays an anomaly and (ii) text data describing the corresponding image data including the anomaly;
   generating, via the image encoder, image embeddings using pixels of the image data;
   generating, via the text encoder, text embeddings using the text data;
   generating semantic subcode using the image embeddings and the text embeddings;
   generating, via the diffusion model, stochastic subcode using the pixels of the image data;
   generating, via the diffusion model, reconstructed image data using the stochastic subcode and the semantic subcode;
   optimizing a loss based at least on an expected value of a difference between a predicted noise of a noisy image at a particular time and an actual noise of the noisy image at the particular time during the generation of the reconstructed image data; and
   updating parameters of the diffusion model using the loss.

2. The computer-implemented method of claim 1, wherein:

   the semantic subcode is a sum of an image component and a text component;
   the text component is computed by multiplying the text embeddings by a first coefficient that is a value of 0, a value between 0 and 1, or a value of 1; and
   the image component is computed by multiplying the image embeddings by a second coefficient, the second coefficient being one minus the first coefficient.

3. The computer-implemented method of claim 1, wherein:

the image data displays an object; and
the anomaly is a defect on the object.

4. The computer-implemented method of claim 1, further comprising:

finetuning a pretrained vision language model (VLM) using a finetuning dataset, the finetuning dataset including (i) a first subset of digital images that includes non-anomalous image data and a first subset of corresponding text data describing the non-anomalous image data and (ii) a second subset of digital images that includes anomalous image data and a second subset of corresponding text data describing the anomalous image data, wherein,

the image encoder is a finetuned image encoding component of the pretrained VLM, and
the text encoder is a finetuned text encoding component of the pretrained VLM.

5. The computer-implemented method of claim 4, wherein:

the finetuning dataset of the pretrained VLM includes at least another data pair;
the another data pair includes another digital image displaying another image data and another text data describing the another image data; and
the another text data includes (i) a data type indicating whether or not the another image data displays an object that is anomalous or non-anomalous, (ii) one or more attribute data indicative of one or more attributes of a defect of the object when the data type is anomalous.

6. The computer-implemented method of claim 5, wherein the another text data of the finetuning dataset that finetunes the VLM is more descriptive than the text data of the training dataset that trains the diffusion model.

7. The computer-implemented method of claim 1, further comprising:

receiving a source image with source image data that is non-anomalous;
receiving text input that describes (i) a desired anomaly to be generated with respect to the source image and (ii) at least one attribute of the anomaly; and
generating, via the machine learning system, a synthetic image using the source image and the text input, wherein the synthetic image displays the source image data with the desired anomaly as described by the text input.

8. The computer-implemented method of claim 7, further comprising:

creating a new dataset that include at least the source image and the synthetic image; and
training an anomaly detector using the new dataset, the anomaly detector including at least one machine learning model.

9. A system comprising:

one or more processors;
one or more computer memory in data communication with the one or more processors, the one or more computer memory having computer readable data stored thereon, the computer readable data including instruction that, when executed by one or more processors, causes the one or more processors to perform a method of a machine learning system that includes an image encoder, a text encoder, and a diffusion model, the method including

receiving a training dataset with data pairs, the data pairs include at least a first data pair that has at least (i) image data that displays an anomaly and (ii) text data describing the corresponding image data including the anomaly;
generating, via the image encoder, image embeddings using pixels of the image data;
generating, via the text encoder, text embeddings using the text data; generating semantic subcode using the image embeddings and the text embeddings;
generating, via the diffusion model, stochastic subcode using the pixels of the image data;
generating, via the diffusion model, reconstructed image data using the stochastic subcode and the semantic subcode; and

optimizing a loss based at least on an expected value of a difference between a predicted noise of a noisy image at a particular time and an actual noise of the noisy image at the particular time during the generation of the reconstructed image data; and

updating parameters of the diffusion model using the loss.

**10.** The system of claim 9, wherein:

the semantic subcode is a sum of an image component and a text component;

the text component is computed by multiplying the text embeddings by a first coefficient that is a value of 0, a value between 0 and 1, or a value of 1; and

the image component is computed by multiplying the image embeddings by a second coefficient, the second coefficient being one minus the first coefficient.

**11.** The system of claim 9, wherein:

the image data displays an object; and

the anomaly is a defect on the object.

**12.** The system of claim 9, wherein the method further comprises:

finetuning a pretrained vision language model (VLM) using a finetuning dataset, the finetuning dataset including (i) a first subset of digital images that includes non-anomalous image data and a first subset of corresponding text data describing the non-anomalous image data and (ii) a second subset of digital images that includes anomalous image data and a second subset of corresponding text data describing the anomalous image data, wherein,

the image encoder is a finetuned image encoding component of the VLM, and

the text encoder is a finetuned text encoding component of the VLM.

**13.** The system of claim 12, wherein:

the finetuning dataset of the pretrained VLM includes at least another data pair;

the another data pair includes another digital image displaying another image data and another text data describing the another image data; and

the another text data includes (i) a data type indicating whether or not the another image data is anomalous or non-anomalous, (ii) one or more attribute data indicative of one or more attributes of a defect displayed in the another image data when the data type is anomalous.

**14.** The system of claim 13, wherein the another text data of the finetuning dataset that finetunes the VLM is more descriptive than the text data of the training dataset that trains the diffusion model.

**15.** The system of claim 9, wherein the method further comprises:

receiving a source image with source image data that is non-anomalous;

receiving text input that describes (i) a desired anomaly to be generated with respect to the source image and (ii) at least one attribute of the anomaly; and

generating, via the machine learning system, a synthetic image using the source image and the text input, wherein the synthetic image displays the source image data with the desired anomaly as described by the text input.

**16.** The system of claim 15, wherein the method further comprises:

creating a new dataset that include at least the source image and the synthetic image; and

training an anomaly detector using the new dataset, the anomaly detector including at least one machine learning model.

**17.** A computer implemented method of generating a dataset for training a machine learning model, the method comprises:

receiving a source image with source image data that is non-anomalous;

receiving text input that describes (i) an anomaly to be generated with respect to the source image data and (ii) one or more attributes of the anomaly;

generating, via an image encoder, source image embeddings using pixels of the source image;

generating, via a text encoder, text input embeddings using the text input;

generating a semantic subcode using the source image embeddings and the text input embeddings;

generating, via a diffusion model, a stochastic subcode using the pixels of the source image; and

generating, via the diffusion model, a synthetic image using the stochastic subcode and the semantic subcode, the synthetic image displaying the source image data with the anomaly as described by the text input, wherein,

the dataset includes at least the source image and the synthetic image, and

the dataset is configured to train the machine learning model to perform an anomaly detection task.

18. The computer-implemented method of claim 17, wherein:

the semantic subcode is a sum of an image component and a text component;

the text component is computed by multiplying the text embeddings by a first coefficient that is a value of 0, a value between 0 and 1, or a value of 1; and

the image component is computed by multiplying the image embeddings by a second coefficient, the second coefficient being one minus the first coefficient.

19. The computer-implemented method of claim 17, wherein:

the source image data displays an object; and

the anomaly is a defect on the object.

20. The computer-implemented method of claim 19, wherein the one or more attributes of the anomaly include (i) a size of the defect and (ii) a location of the defect.

10

12

10B

Image of a PEG product with a **large** defect on the **top**. 12B

Image of a PEG product with a **large** defect on the **left**. 12A

10A

100

| IMAGE ENCODER 110 | TEXT ENCODER 120 |

| $z^T_1$ | $z^T_2$ | $z^T_3$ | $z^T_4$ | 16

| $z^I_1$ |
| $z^I_2$ |
| $z^I_3$ |
| $z^I_4$ |

18

14

# FIG. 1

FIG. 2

34

Image of a PEG product with a **small** defect on the **bottom right.**

36

200

100

IMAGE ENCODER
110

TEXT ENCODER
120

38  $Z^I$

$Z^T$  40

130

SEMANTIC SUBCODE

42

44

140C

140A  140B

140C

DIFFUSION MODEL
140

46

48

## FIG. 3

400

| PROCESSING SYSTEM 402 | SENSOR SYSTEM 410 | I/O SYSTEM 412 | OTHER FUNCTIONAL MODULES 414 |

MEMORY SYSTEM 404

CONTROLLED DEFECT AUGMENTER 300

200

ML DATA 406

OTHER RELEVANT DATA 408

# FIG. 4

TEXT INPUT

SOURCE
IMAGE DATA

CONTROLLED DEFECT
AUGMENTER
300

DEFECT
AUGMENTATION
MODEL
200

SYNTHETIC
IMAGE DATA

TEXT INPUT

SOURCE
IMAGE DATA

DATASET
510

MACHINE
LEARNING
MODEL
500

# FIG. 5

600

CONTROL SYSTEM 620

SENSOR SYSTEM 610

PROCESSING SYSTEM 640

MEMORY SYSTEM 650

COMPUTER VISION APPLICATION 680

TRAINED MACHINE LEARNING MODEL 500

I/O SYSTEM 660

ACTUATOR SYSTEM 630

OTHER FUNCTIONAL MODULES 670

OTHER RELEVANT DATA 690

FIG. 6

FIG. 7

FIG. 8

# EUROPEAN SEARCH REPORT

**Application Number**

EP 25 21 1681

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIE HU ET AL: "AnomalyXFusion: Multi-modal Anomaly Synthesis with Diffusion", ARXIV.ORG, CORNELL UNIVERSITY LIBRARY, 201 OLIN LIBRARY CORNELL UNIVERSITY ITHACA, NY 14853, 2 May 2024 (2024-05-02), XP091744356, * abstract * * page 3, right-hand column, paragraph 1st * * 3 MCTec Caption Dataset; page 5 - page 6; figures 1,2,4 * * Semantic Embedding, Location Embedding, Textural Embedding; page 6, right-hand column * * X-Embedding; page 7, left-hand column * * Dynamic Diffusion Process, equation 17; page 8, left-hand column * * Anomaly detection; page 12, left-hand column * ----- | 1-20 | INV. G06V10/774 G06V10/82 |
| A | PANAGIOTIS ALIMISIS ET AL: "Advances in Diffusion Models for Image Data Augmentation: A Review of Methods, Models, Evaluation Metrics and Future Research Directions", ARXIV.ORG, CORNELL UNIVERSITY LIBRARY, 201 OLIN LIBRARY CORNELL UNIVERSITY ITHACA, NY 14853, 4 July 2024 (2024-07-04), XP091811662, * the whole document * ----- | 1-20 | **TECHNICAL FIELDS SEARCHED (IPC)** <br> G06V |

The present search report has been drawn up for all claims

| Place of search | Date of completion of the search | Examiner |
|---|---|---|
| The Hague | 9 December 2025 | Meier, Ueli |